# FASCICULE DE BREVET EUROPEEN

(11) **EP 1 811 605 B1**
(45) Date de publication et mention de la délivrance du brevet: **26.03.2014**
(21) Numéro de dépôt: 07100996.3
(22) Date de dépôt: 23.01.2007
(51) Int. Cl.: H02B 1/052, H01R 9/24, H01R 9/26, H01R 25/16

(54) **Module de raccordement électrique et rail de support pour fixation par encliquetage de tels modules.**
Modul für den elektrischen Anschluss und Stützschiene für die Schnappbefestigung solcher Module
Electric connection module and support rail for fastening such modules through a lock mechanism

(30) Priorité: 24.01.2006 FR 0600636
(43) Date de publication de la demande: 25.07.2007
(73) Titulaire: Amphenol Air LB, 08110 Blagny (FR)
(72) Inventeur: Miquet, Pascal, 08090, Tournes (FR)
(74) Mandataire: Delprat, Olivier

(56) Documents cités:
- EP-A1- 0 756 364
- FR-A- 2 123 622
- FR-A1- 2 479 581
- US-A- 3 160 280
- US-A- 3 547 274
- US-A- 3 576 520

## Description

La présente invention concerne les systèmes de raccordement électrique étanches à jonction rapide. Plus particulièrement, l'invention se rapporte à un module de raccordement électrique et à un rail pour la fixation par encliquetage de tels modules pour constituer une barrette modulaire de dispositifs de raccordement.

En effet, les systèmes de raccordement électrique à jonction rapide comportent généralement un rail de support par exemple métallique ou réalisé à partir d'un matériau composite sous la forme d'un profilé en U comprenant deux ailes longitudinales entre lesquelles sont maintenus des modules de raccordement.

Les modules de raccordement, quant à eux, présentent une forme générale parallélépipédique et comportent deux faces antérieure et postérieure conformées de manière à coopérer avec les ailes longitudinales du rail.

Dans un mode de réalisation connu, les ailes sont chacune pourvues d'un rebord supérieur rentrant tandis que les faces antérieure et postérieure des modules sont chacune pourvues d'une gorge dans laquelle s'engage un rebord correspondant. Le rail constitue ainsi une glissière dans laquelle les modules peuvent être insérés successivement pour former une barrette de modules de raccordement. Le montage de chaque module s'effectue en l'orientant par rapport à l'axe longitudinal du rail de manière à permettre son insertion entre les deux ailes selon un mouvement généralement perpendiculaire au plan général du rail puis en insérant, par rotation, les rebords dans les gorges des faces antérieure et postérieure des modules jusqu'à ce que les modules adoptent une position transversale. Les modules ainsi formés sont alors maintenus en position en utilisant des butées à vis longitudinalement déplaçables sur le rail qui viennent se monter de part et d'autre de la barrette de modules.

Lorsque l'on souhaite ajouter un module, il convient de desserrer la vis de l'une des butées, de l'écarter de la barrette, d'insérer un nouveau module puis de resserrer le rail.

Comme on le conçoit, ce type d'agencement permet un maintien efficace et fiable des modules et permet de disposer d'un système de raccordement électrique relativement compact. Toutefois, la présence des butées nécessaires au maintien de la barrette de modules augmente le nombre de pièces constitutives du système de raccordement et, par conséquent, son coût de fabrication, et complique le montage des modules.

On a tenté de pallier ces inconvénients en utilisant des systèmes de raccordement électrique dans lesquels les modules de raccordement viennent se monter sur le rail par encliquetage.

On connaît ainsi, dans l'état de la technique, des modules de raccordement électrique dans lesquels les faces antérieure et postérieure des modules comportent respectivement un bossage qui vient s'insérer dans une empreinte ménagée dans une des ailes du rail et des moyens d'encliquetage qui coopèrent avec des moyens d'encliquetage complémentaires ménagés dans l'autre aile du rail.

On pourra à cet égard se référer au document EP 0 756 364 qui décrit un système de raccordement électrique dans lequel le maintien axial des barrettes est réalisé en formant les moyens d'encliquetage, d'une part, sous la forme d'une rainure pourvue d'un bossage médian pratiqué dans la face postérieure des modules et, d'autre part, sous la forme d'une nervure pourvue d'une échancrure médiane ménagée dans la deuxième aile du rail, l'insertion du bossage médian dans l'échancrure assurant un maintien axial des modules.

Comme on le conçoit, ce type de configuration complique la réalisation du boîtier, des modules et du rail.

Le but de l'invention est donc de pallier les inconvénients des systèmes de raccordement électrique de l'état de la technique en dissociant les moyens d'encliquetage des modules sur le rail et les moyens de maintien axial des modules de raccordement.

Un autre but de l'invention est de fournir un module de raccordement électrique de conducteurs permettant de pallier les inconvénients de l'état de la technique tout en conservant une compatibilité avec des rails de support conventionnels.

L'invention a donc pour objet, selon un premier aspect, un module de raccordement électrique de conducteurs comprenant un boîtier comprenant une première face munie d'un bossage destiné à s'engager dans une empreinte pratiquée dans une aile longitudinale d'un rail de support profilé à section transversale en forme de U et une deuxième face opposée à la première face et pourvue de moyens d'encliquetage adaptés pour coopérer avec des moyens d'encliquetage complémentaires pratiqués dans une deuxième aile du rail.

Le module de raccordement comporte en outre une surface de fond munie extérieurement d'au moins une butée s'étendant généralement perpendiculairement auxdites première et deuxième faces et destinée à coopérer avec une butée complémentaire pratiquée dans le fond du rail.

Selon une autre caractéristique de l'invention, le boîtier a une forme générale parallélépipédique et comporte deux faces longitudinales généralement planes, les première et deuxième faces constituant respectivement des faces latérales antérieure et postérieure du boîtier.

En ce qui concerne le bossage, celui-ci est par exemple pratiqué à la base du boîtier.

Dans un mode de réalisation avantageux, les première et deuxième faces comportent en outre chacune une nervure saillante convexe orientée parallèlement au fond du boîtier.

On conserve alors une compatibilité avec un rail de support conventionnel.

En outre, la première face peut être pourvue d'une glissière inclinée destinée à recevoir une étiquette d'indentification.

Selon encore une autre caractéristique de l'invention, la deuxième face du boîtier comporte un épaulement dans lequel s'engage au moins une dent d'encliquetage pratiquée dans la deuxième aile du rail. Cet épaulement peut aussi constituer la nervure saillante.

L'épaulement se prolonge avantageusement vers le fond du boîtier par une nervure sagittale destinée à s'engager entre les deux dents d'encliquetage.

Selon encore une autre caractéristique du module de raccordement selon l'invention, la butée du fond du boîtier est formée par un rebord périphérique en saillie à partir des faces longitudinales et des faces antérieure et postérieure du boîtier.

Selon un deuxième aspect, l'invention a également pour objet un rail de support pour la fixation par encliquetage de modules de raccordement électrique de forme générale parallélépipédique, le rail étant réalisé par moulage d'une matière thermoplastique sous la forme d'un profilé en U comprenant une première aile longitudinale comportant une série d'empreintes destinées à recevoir des bossages pratiqués dans une première face des modules et une deuxième aile longitudinale comprenant des moyens d'encliquetage destinés à coopérer avec des moyens d'encliquetage complémentaires respectifs pratiqués dans une deuxième face du module.

Le fond du rail comporte en outre une série de nervures longitudinales destinées respectivement à s'engager dans des empreintes pratiquées dans une surface externe de fond des modules de raccordement.

Selon une autre caractéristique du rail de support selon l'invention, la deuxième aile est constituée par une succession de tronçons d'ailes formant languettes séparées correspondant chacune à un module.

Dans un mode de réalisation avantageux, chaque tronçon d'aile comporte une paire de dents d'encliquetage venant s'encliqueter sur un épaulement pratiqué dans l'une des faces du boîtier correspondant.

Les dents d'encliquetage peuvent en outre être pourvues de rampes en regard pour le guidage d'une nervure pratiquée dans ladite face du boîtier.

D'autres buts, caractéristiques et avantages de l'invention apparaîtront à la lecture de la description suivante, donnée uniquement à titre d'exemple non limitatif, et faite en référence aux dessins annexés sur lesquels :
- les figures 1 et 2 sont des vues en perspective d'un module de raccordement électrique conforme à l' invention ;
- les figures 3 et 4 sont des vues en perspective d'un rail selon l'invention ;
- la figure 5 est une vue en perspective d'un système de raccordement électrique lors du montage des modules des figures 1 et 2 sur les rails des figures 3 et 4 ; et
- la figure 6 est une vue en coupe transversale selon la ligne VI-VI du système de raccordement électrique de la figure 5.

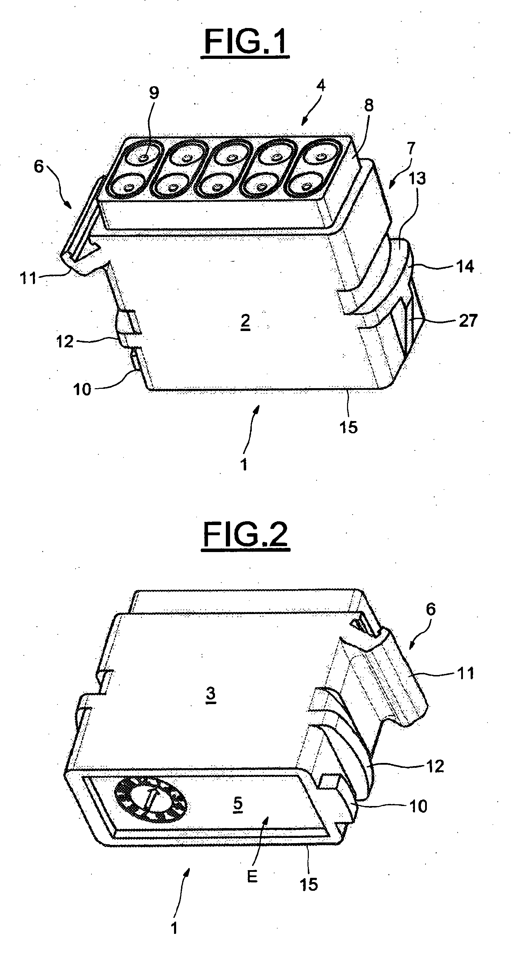

On va tout d'abord décrire, en référence aux figures 1 et 2, la structure d'un module de raccordement électrique conforme à l'invention, désigné par la référence numérique générale 1.

Comme on le voit sur cette figure, le module 1 a une forme générale parallélépipédique et comporte deux faces longitudinales 2 et 3 généralement planes, une face supérieure 4 et une face inférieure 5, ainsi qu'une première face transversale 6, ou face antérieure, et une deuxième face transversale 7 ou face postérieure.

Comme cela est connu en soi, le module 1 est constitué par un boîtier réalisé en matière plastique rigide délimitant intérieurement un logement recevant un élément d'étanchéité 8 en matière plastique relativement souple, muni de trous, tels que 9, pour l'insertion d'embouts de raccordement fixés aux extrémités de conducteurs à interconnecter.

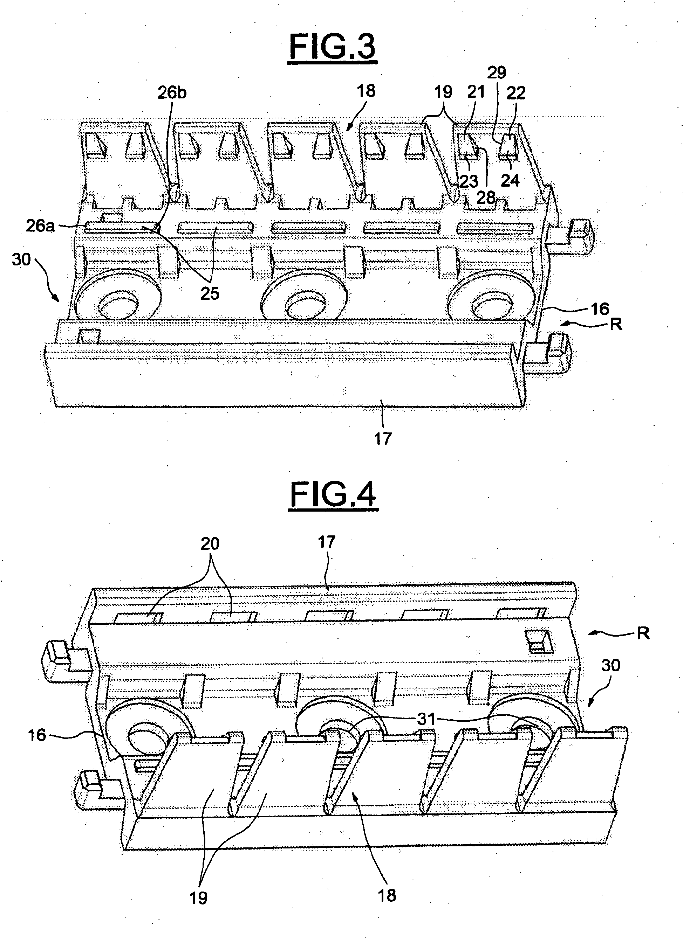

Un tel module est destiné à constituer un élément d'une barrette de modules de raccordement étanche à jonction rapide et destiné à être monté sur le rail de support R illustré aux figures 3 et 4. A cet effet, la face antérieure 6 du module 1 est pourvue d'un bossage 10 en saillie à partir de la base du boîtier, qui est destiné à s'insérer dans une empreinte correspondante pratiquée dans le rail.

En partie supérieure, la face antérieure 6 est pourvue d'une glissière inclinée 11 servant à l'insertion d'une étiquette d'indentification du module. En partie médiane, la face antérieure 6 est pourvue d'une nervure transverse antérieure 12. Cette nervure adopte une forme générale convexe et arrondie. Elle est destinée à permettre l'insertion du module dans un rail conventionnel en autorisant une rotation du module relativement au rail.

Du côté opposé, la face postérieure 7 du module 1 est pourvue de moyens d'encliquetage destinés à coopérer avec des moyens d'encliquetage complémentaires ménagés dans le rail. A cet effet, le module est pourvu d'un épaulement 13 constitué par la face supérieure d'une nervure transverse postérieure 14 s'étendant entre les deux faces longitudinales 2 et 3 du boîtier. Cet épaulement 13 adopte également une forme convexe arrondie pour autoriser un montage du module sur un rail conventionnel.

Comme on le voit sur la figure 2, la base du boîtier comporte une empreinte E délimitée par un rebord périphérique 15 s'étendant dans le prolongement des faces latérales 2, 3, 6 et 7 du boîtier. Ce rebord 15, et en particulier les côtés longitudinaux du rebord, constitue une butée assurant un maintien axial du module, lorsqu'il est assemblé sur le rail.

On va maintenant décrire en référence aux figures 3 et 4 la structure générale du rail de support sur lequel viennent se monter des modules de raccordement 1 pour constituer une barrette de modules.

Comme on le voit sur ces figures, le rail R a une forme de profilé en U. Il est réalisé en matière thermoplastique et comporte un fond 16 et deux ailes longitudinales 17 et 18, respectivement antérieure et postérieure. Le rail R présente un profil asymétrique. En effet, l'aile antérieure 17 a une hauteur plus faible que l'aile postérieure 18. En outre, l'aile antérieure 17 est continue alors que l'aile postérieure 18 est constituée par une succession de tronçons d'aile, tels que 19, correspondant chacun à un module de raccordement pour former des languettes déformables indépendamment l'une de l'autre pour l'insertion des modules.

En référence à la figure 4, l'accrochage des modules s'effectue par insertion des bossages 10 dans une série d'empreintes 20 respectives régulièrement pratiquées dans l'aile antérieure 17 en regard de chaque languette 19. L'encliquetage des modules s'effectue au moyen des languettes 19 et, en particulier, au moyen d'une paire de dents d'encliquetage 21 et 22 portées par la face interne de chaque languette, au voisinage des bords latéraux de la languette. Chaque dent est pourvue d'une rampe 23 et 24 sur laquelle vient prendre appui la nervure transverse 14 de la face postérieure 7 d'un module au cours de son montage pour venir s'encliqueter sur l'épaulement 13 pour obtenir un maintien efficace et fiable des modules.

Les rampes 23 et 24 sont tournées vers l'intérieur du rail, c'est-à-dire vers l'autre aile longitudinale 17. Les dents 21 et 22 de chaque paire sont en outre pourvues de rampes 28 et 29 en regard l'une de l'autre pour recevoir et guider une nervure sagittale 27 du module 1.

En se référant à nouveau à la figure 3, le maintien axial des modules est alors obtenu au moyen de nervures telles que 25 en relief s'étendant en saillie à partir du fond 15. Les nervures 25 présentent une largeur correspondant à la largeur de l'empreinte pratiquée dans la surface extérieure 5 de fond du boîtier des modules de sorte que les bords d'extrémité latéraux 26a et 26b des nervures 25 constituent des butées sur lesquelles vient prendre appui le rebord périphérique 15 de la base du boîtier pour le maintien latéral des modules.

Le maintien des boîtiers s'effectue ainsi, après montage, sous l'effet combiné de l'insertion des bossages 10 dans la série d'empreintes 20 qui assurent l'accrochage de la face antérieure des boîtiers, des dents d'encliquetage 21 et 22 en appui sur l'épaulement 13 de la nervure transverse 14 des modules, qui évitent tout déplacement vers le haut des modules, et des nervures 25 qui s'engagent dans l'empreinte E de la base des modules et empêchent ainsi tout déplacement axial des modules.

Indépendamment ou en combinaison, la mise en oeuvre de l'encliquetage des modules peut être obtenue ou améliorée en prolongeant la nervure transverse 14 des modules par la nervure sagittale 27 jusqu'au rebord 15 de la surface extérieure de fond 5 du boîtier, sous la forme d'une rampe de hauteur régulièrement décroissante jusqu'à la base du boîtier et en dotant chaque languette 19 de deux rampes complémentaires 28 et 29 portées par les dents 21 et 22 pour guider la nervure sagittale 27 lors de l'insertion du module. Dans ce cas, le guidage latéral des modules est alors amélioré par la nervure sagittale entre les rampes 28 et 29.

On voit enfin sur les figures 3 et 4 que le rail peut être en outre pourvu d'une gorge longitudinale 30 dans laquelle sont prévus des trous de fixation 31.

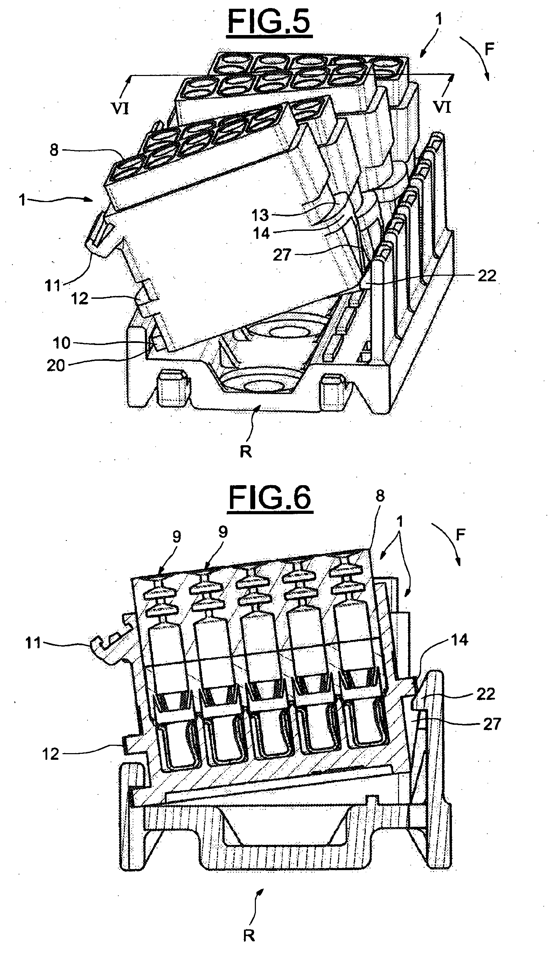

En se référant maintenant aux figures 5 et 6, sur lesquelles on a représenté différents modules 1 dans différentes positions de montage, on voit que le montage d'un module selon l'invention est particulièrement simple à effectuer.

En effet, il convient simplement d'incliner les modules par rapport au rail pour insérer le bossage 10 dans l'empreinte 20 du rail puis de faire basculer les modules autour de l'empreinte pour encliqueter la face postérieure 7 du module dans une languette 19 correspondante jusqu'à ce que, en position d'encliquetage, la base du boîtier vienne prendre appui contre le fond du rail (flèche F). Dans cette position, la nervure 25 s'engage dans l'empreinte E pratiquée dans le fond du boîtier et assure un maintien latéral du module dans le rail. En outre, dans cette position, le bossage 10 est toujours maintenu dans l'empreinte du rail. La nervure sagittale 27 est maintenue entre les ergots 28 et 29 de l'aile postérieure 18 du rail.

## Revendications

1. Module de raccordement électrique de conducteurs comprenant un boîtier comprenant une première face (6) munie d'un bossage (10) destiné à s'engager dans une empreinte (20) pratiquée dans une aile (17) longitudinale d'un rail (R) de support profilé à section transversale en forme de U, et une deuxième face opposée (7) pourvue de moyens d'encliquetage (13, 14) adaptés pour coopérer avec des moyens d'encliquetage complémentaires (21, 22) pratiqués dans une deuxième aile (18) du rail, **caractérisé en ce qu'**il comporte en outre une surface de fond (5) munie extérieurement d'au moins une butée (15) s'étendant généralement perpendiculairement auxdites première et deuxième faces et destinée à coopérer avec une butée complémentaire (25) pratiquée dans le fond du rail.

2. Module selon la revendication 1, **caractérisé en ce que** le boîtier a une forme générale parallélépipédique et comprend deux faces longitudinales (2, 3) généralement planes, les première et deuxième faces (6, 7) constituant respectivement des faces latérales antérieure et postérieure du boîtier.

3. Module selon l'une des revendications 1 et 2, **caractérisé en ce que** le bossage (10) est pratiqué à la base du boîtier.

4. Module selon l'une quelconque des revendications 1 à 3, **caractérisé en ce que** les première et deuxième faces (6, 7) comportent en outre chacune une nervure (12, 13) saillante convexe orientée parallèlement au fond du boîtier.

5. Module selon l'une quelconque des revendications 1 à 4, **caractérisé en ce que** la deuxième face (7) du boîtier comporte un épaulement (13) dans lequel s'engage au moins une dent (21, 22) d'encliquetage pratiquée dans la deuxième aile (18) du rail.

6. Module selon la revendication 5, **caractérisé en ce que** l'épaulement (13) forme l'une desdites nervures (13).

7. Module selon l'une des revendications 5 et 6, **caractérisé en ce que** l'épaulement se prolonge vers le fond du boîtier par une nervure sagittale (27) destinée à s'engager entre les deux dents d'encliquetage.

8. Module selon l'une quelconque des revendications 1 à 7, **caractérisé en ce que** la première face (6) est pourvue d'une glissiére (11) inclinée destinée à recevoir une étiquette d'identification.

9. Module selon l'une quelconque des revendications 2 à 8, **caractérisé en ce que** la butée de fond du boîtier est formée par un rebord périphérique (15) en saillie à partir des faces longitudinales et des faces antérieure et postérieure du boîtier.

10. Rail de support pour la fixation par encliquetage de module de raccordement électrique de forme générale paranélépipédique, le rail étant réalisé par moulage d'une matière thermoplastique sous la forme d'un profilé en U comprenant une première aile longitudinale (17) comportant une série d'empreintes (20) destinées respectivement à recevoir des bossages (10) pratiqués dans une première face (6) des modules et une deuxième aile (18) longitudinale comportant des moyens d'encliquetage (21, 22) destinés à coopérer avec des moyens d'encliquetage complémentaires (13, 14) respectifs pratiqués dans une deuxième face (7) des modules, **caractérisé en ce que** le fond du rail comporte une série de nervures (25) longitudinales destinées respectivement à s'appuyer dans des empreintes pratiquées dans une surface externe du fond des modules.

11. Rail selon la revendication 10, **caractérisé en ce que** la deuxième aile (18) du rail est constituée par une succession de tronçons d'aile (19) formant languettes séparées correspondant chacune à un module.

12. Rail selon la revendication 11, **caractérisé en ce que** chaque tronçon d'aile (19) comporte une paire de dents d'encliquetage (21, 22) venant s'encliqueter sur un épaulement (13) pratiqué dans l'une des faces du boîtier correspondant

13. Rail selon la revendication 12, **caractérisé en ce que** les dents d'encliquetage (21, 22) sont pourvues de rampes, en regard (28, 29) pour le guidage d'une nervure sagittale (27) pratiquée dans ladite face du boîtier.

## Patentansprüche

1. Elektrisches Anschlussmodul für Leiter, das ein Gehäuse enthält, welches eine erste Seite (6), die mit einer Wölbung (10) versehen ist, welche dazu bestimmt ist, sich in eine in einem Längsflügel (17) einer profilierten Tragschiene (R) mit U-förmigem Querschnitt ausgeführte Vertiefung (20) einzufügen, und eine gegenüberliegende zweite Seite (7) enthält, die mit Einrasteinrichtungen (13, 14) versehen ist, welche geeignet sind, um mit komplementären Einrasteinrichtungen (21, 22) zusammenzuwirken, die in einem zweiten Flügel (18) der Schiene ausgeführt sind, **dadurch gekennzeichnet, dass** es außerdem eine Bodenfläche (5) aufweist, die außen mit mindestens einem Anschlag (15) versehen ist, der sich allgemein lotrecht zur ersten und zweiten Seite erstreckt und dazu bestimmt ist, mit einem komplementären Anschlag (25) zusammenzuwirken, der im Boden der Schiene ausgeführt ist.

2. Modul nach Anspruch 1, **dadurch gekennzeichnet, dass** das Gehäuse eine allgemein parallelepipedische Form hat und zwei allgemein ebene Längsseiten (2, 3) enthält, wobei die erste und die zweite Seite (6, 7) vordere bzw. hintere Seitenflächen des Gehäuses bilden.

3. Modul nach einem der Ansprüche 1 und 2, **dadurch gekennzeichnet, dass** die Wölbung (10) an der Basis des Gehäuses ausgeführt ist.

4. Modul nach einem der Ansprüche 1 bis 3, **dadurch gekennzeichnet, dass** die erste und zweite Seite (6, 7) außerdem je eine konvexe vorspringende Rippe (12, 13) aufweisen, die parallel zum Boden des Gehäuses ausgerichtet ist.

5. Modul nach einem der Ansprüche 1 bis 4, **dadurch gekennzeichnet, dass** die zweite Seite (7) des Gehäuses eine Schulter (13) aufweist, in die mindestens ein Einrastzahn (21, 22) eingreift, der im zweiten Flügel (18) der Schiene ausgeführt ist.

6. Modul nach Anspruch 5, **dadurch gekennzeichnet, dass** die Schulter (13) eine der Rippen (13) formt.

7. Modul nach einem der Ansprüche 5 und 6, **dadurch gekennzeichnet, dass** die Schulter sich zum Boden des Gehäuses durch eine sagittale Rippe (27) verlängert, die dazu bestimmt ist, sich zwischen die zwei Einrastzähne einzufügen.

8. Modul nach einem der Ansprüche 1 bis 7, **dadurch gekennzeichnet, dass** die erste Seite (6) mit einer geneigten Gleitschiene (11) versehen ist, die dazu bestimmt ist, ein Kennzeichnungsetikett aufzunehmen.

9. Modul nach einem der Ansprüche 2 bis 8, **dadurch gekennzeichnet, dass** der Bodenanschlag des Gehäuses von einer Umfangsrandleiste (15) geformt wird, die ausgehend von den Längsseiten und der Vorder- und Rückseite des Gehäuses vorsteht.

10. Tragschiene zur Einrastbefestigung von elektrischen Anschlussmodulen allgemein parallelepipedischer Form, wobei die Schiene durch Formguss eines thermoplastischen Materials in Form eines U-förmigen Profilteils hergestellt wird, das einen ersten Längsflügel (17), der eine Reihe von Vertiefungen (20) aufweist, die dazu bestimmt sind, je in einer ersten Seite (6) der Module ausgeführte Wölbungen (10) aufzunehmen, und einen zweiten Längsflügel (18) enthält, der Einrasteinrichtungen (21, 22) aufweist, die dazu bestimmt sind, mit komplementären Einrasteinrichtungen (13, 14) zusammenzuwirken, die in einer zweiten Seite (7) der Module ausgeführt sind, **dadurch gekennzeichnet, dass** der Boden der Schiene eine Reihe von Längsrippen (25) aufweist, die dazu bestimmt sind, sich in Vertiefungen aufzulegen, die in einer Außenfläche des Bodens der Module ausgeführt sind.

11. Schiene nach Anspruch 10, **dadurch gekennzeichnet, dass** der zweite Flügel (18) der Schiene aus einer Folge von Flügelabschnitten (19) besteht, die getrennte Zungen formen, welche je einem Modul entsprechen.

12. Schiene nach Anspruch 11, **dadurch gekennzeichnet, dass** jeder Flügelabschnitt (19) ein Paar von Einrastzähnen (21, 22) aufweist, die auf einer Schulter (13) einrasten, die in einer der Seiten des entsprechenden Gehäuses ausgeführt ist.

13. Schiene nach Anspruch 12, **dadurch gekennzeichnet, dass** die Einrastzähne (21, 22) mit gegenüberliegenden Rampen (28, 29) zur Führung einer sagittalen Rippe (27) versehen sind, die in der Seite des Gehäuses ausgeführt ist.

## Claims

1. Module for electrical connection of conductors, including a housing including a first face (6) provided with a boss (10) adapted to engage in a recess (20) formed in a longitudinal flange (17) of a profiled supporting rail (R) of U-shaped cross-section and an opposite second face (7) provided with clipping means (13, 14) adapted to cooperate with complementary clipping means (21, 22) formed in a second flange (18) of the rail, **characterized in that** it further includes a bottom surface (5) provided externally with at least one stop (15) extending generally perpendicularly to said first and second faces and adapted to cooperate with a complementary stop (25) formed in the bottom of the rail.

2. Module according to claim 1, **characterized in that** the housing has a parallelepipedal general shape and includes two generally planar longitudinal faces (2, 3), the first and second faces (6, 7) respectively forming front and rear lateral faces of the housing.

3. Module according to either of claims 1 and 2, **characterized in that** the boss (10) is formed at the base of the housing.

4. Module according to any one of claims 1 to 3, **characterized in that** the first and second faces (6, 7) each further include a projecting convex rib (12, 13) oriented parallel to the bottom of the housing.

5. Module according to any one of claims 1 to 4, **characterized in that** the second face (7) of the housing includes a shoulder (13) in which engages at least one clipping tooth (21, 22) formed in the second flange (18) of the rail.

6. Module according to claim 5, **characterized in that** the shoulder (13) forms one of said ribs (13).

7. Module according to either of claims 5 and 6, **characterized in that** the shoulder is extended towards the base of the housing by a sagittal rib (27) adapted to engage between the two clipping teeth.

8. Module according to any one of claims 1 to 7, **characterized in that** the first face (6) is provided with an inclined slideway (11) adapted to receive an identification label.

9. Module according to any one of claims 2 to 8, **characterized in that** the stop at the bottom of the housing is formed by a peripheral rim (15) projecting from the longitudinal faces and the front and rear faces of the housing.

10. Support rail for fixing by clipping electrical connection modules of parallelepipedal general shape, the rail being formed by moulding a thermoplastic material in the form of a U-section including a first longitudinal flange (17) including a series of recesses (20) adapted to receive respective bosses (10) formed on a first face (6) of the modules and a second longitudinal flange (18) including clipping means (21, 22) adapted to cooperate with respective complementary clipping means (13, 14) formed in a second face (7) of the modules, **characterized in that** the base of the rail includes a series of longitudinal ribs (25) adapted to bear in respective recesses formed in an external surface of the bottom of the modules.

11. Rail according to claim 10, **characterized in that** the second flange (18) of the rail is formed by a succession of flange sections (19) forming separate tongues each corresponding to one module.

12. Rail according to claim 11, **characterized in that** each flange section (19) includes a pair of clipping teeth (21, 22) which clip onto a shoulder (13) formed in one of the faces of the corresponding housing

13. Rail according to claim 12, **characterized in that** the clipping teeth (21, 22) are provided with facing ramps (28, 29) for guiding a sagittal rib (27) formed in said face of the housing.
